# EUROPEAN PATENT APPLICATION

(11) **EP 2 743 736 A1**
(43) Date of publication of application: **18.06.2014**
(21) Application number: 12306600.3
(22) Date of filing: 17.12.2012
(51) Int. Cl.: G01V 1/38

(54) **Tail device connectable to a tail of a towed acoustic linear antenna cooperating with a set of at least one depth control means.**

(71) Applicant: Sercel, 44470 Carquefou (FR)
(72) Inventor: Voisin, Noël, 56100 LORIENT (FR)
(74) Representative: Guéné, Patrick

(57) **Abstract**

A tail device (60), connectable to a tail (70) of a towed acoustic linear antenna (71) cooperating with a set of at least one depth control mean (72) having a determined diving capability enabling to immerse the tail of the towed acoustic linear antenna. The tail device comprises a flotation body (61) and a satellite navigation system receiver comprising an antenna (66) fixed on said flotation body. The tail device (60) is a towfish device having a flotation which is lesser than the diving capability of the set of at least one depth control mean.

## Description

### 1. FIELD OF THE INVENTION

The field of the invention is the acquisition of geophysics data. It deals with the equipments required in order to study the seabed and its sediment layers properties.

More specifically, the invention relates to a tail device, connectable to a streamer tail (i.e. the tail of a towed acoustic linear antenna) which can be immersed by cooperating with a set of at least one depth control mean (a depth control mean can be for example a "bird" as disclosed below).

The invention can be applied notably to the oil prospecting industry using seismic method (sea oil survey), but can be of interest for any other field which requires a system performing geophysics data acquisition in a marine environment.

### 2. TECHNOLOGICAL BACKGROUND

It is sought more particularly here below in this document to describe problems existing in the field of seismic data acquisition for oil prospecting industry. The invention of course is not limited to this particular field of application but is of interest for any technique that has to cope with closely related or similar issues and problems.

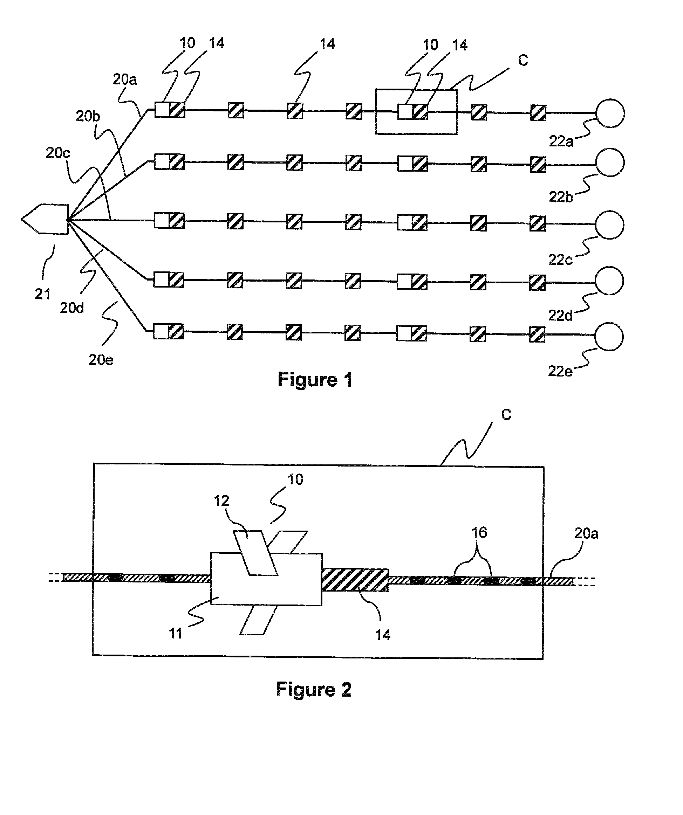

The operations of acquiring seismic data on site conventionally use networks of seismic sensors, like accelerometers, geophones or hydrophones. We consider below the context of seismic data acquisition in a marine environment, in which the seismic sensors are hydrophones. The hydrophones are distributed along cables in order to form linear acoustic antennas normally referred to as "streamers" or "seismic streamers". As shown in **figure 1****,** the network of seismic streamers 20a to 20e is towed by a seismic vessel 21. The hydrophones are referenced 16 in **figure 2****,** which illustrates in detail the block referenced C in figure 1 (i.e. a portion of the streamer referenced 20a).

The seismic method is based on an analysis of reflected seismic waves. Thus, to collect geophysical data in a marine environment, one or more submerged seismic sources are activated in order to propagate omnidirectional seismic wave trains. The pressure wave generated by the seismic source passes through the column of water and insonifies the different layers of the seabed. The reflected seismic waves (i.e. reflected acoustic signals) are then detected by the hydrophones distributed over the length of the seismic streamers. These acoustic signals are processed and retransmitted by telemetry from the seismic streamers to the operator station situated on the seismic vessel, where the processing of the raw data is carried out (in an alternative solution, the seismic acoustic signals are stored for a later processing).

During seismic surveys, it is important to precisely locate the streamers in particular for:
- monitoring the position of the hydrophones (distributed along the seismic streamers) in order to obtain a satisfactory precision of the image of the seabed in the exploration zone;
- detecting the movements of the streamers with respect to one another (the streamers are often subjected to various external natural constrains of variable magnitude, such as the wind, waves, currents); and
- monitoring the navigation of streamers, in particular in a situation of bypassing an obstacle (such as an oil barge).

Control of the positions of streamers lies in the implementation of navigation control devices, commonly referred to as "birds" (white squares referenced 10 in figure 1), or "leveling devices". They are installed at regular intervals (every 300 meters for example) along the seismic streamers. The function of those birds is to guide the streamers between themselves. In other words, the birds are used to control the depth as well as the lateral position of the streamers. For this purpose, and as illustrated in figure 2, each bird 10 comprises a body 11 equipped with motorized pivoting wings 12 (or more generally means of mechanical moving) making it possible to modify the position of the streamers laterally between them (this is referred to a horizontal driving) and drive the streamers in immersion (this is referred to a vertical driving).

In order to improve the seabed analysis, it has recently been proposed to carry out variable depth operations, where the streamer tails are deeply immersed (e.g. up to 60 m depth) thanks to birds.

To carry out the localization of the seismic streamers (allowing a precise horizontal driving of the streamers by the birds), acoustic nodes are distributed along the streamers and form a full acoustic network from head to tail ("full bracing network"). These acoustic nodes are represented by hatched squares, referenced 14, in figures 1 and 2. As shown in figure 1, some acoustic nodes 14 of the acoustic network are associated with a bird 10 (case of figure 2), and other are not. The acoustic nodes 14 comprise underwater acoustic communication means (hereafter referred to as electro-acoustic transducers) and associated electronics, allowing to estimate the distances between acoustic nodes (named here below "inter-node distances"). More specifically, these transducers are transmitters and receivers of acoustic signals, which can be used to estimate an inter-node distance separating two acoustic nodes (acting as sender node and receiver node respectively) situated on two different streamers (which may be adjacent or not) as a function of an acoustic signal propagation duration measured between these two nodes (i.e. a travel time of the acoustic signal from the sender node to the receiver node). From the acoustic network, this thereby forms a mesh of inter-node distances allowing to know precise horizontal positioning of all the streamers. Transducer here is understood to mean either a single electro-acoustic device consisting of a transceiver (emitter/receiver) of acoustic signals, or a combination of a sender device (e.g. a pinger) and a receiver device (e.g. a pressure particle sensor (hydrophone) or a motion particle sensor (accelerometer, geophone...). Usually, each acoustic node comprises an electro-acoustic transducer enabling it to behave alternately as a sender node and a receiver node (for the transmission and the reception, respectively, of acoustic signals). In an alternative embodiment, a first set of nodes act only as sender nodes and a second set of nodes act only as receiver nodes. A third set of nodes (each acting alternately as a sender node and a receiver node) can also be used in combination with the first and second sets of nodes.

Besides, a tail buoy (referenced 22a to 22e in figure 1) is connected to the end of each streamer 20a to 20e, to provide the following functions:
- accurate Differential Global Positioning System (DGPS) positioning, relatively to the aforesaid acoustic network. In other words, after the streamers have been deployed, the positions of the towed streamers are obtained by combining the position information provided by the full acoustic network and the DGPS information provided by the tail buoys 22a to 22e. While deploying the streamers, the full acoustic network is not yet operational, and only the DGPS information are available;
- hazard warning of the submerged streamer with flashing light and radar reflector;
- tension to the tail of the streamer (i.e. adding drag, to straighten the streamer);
- flotation in case of streamer break.

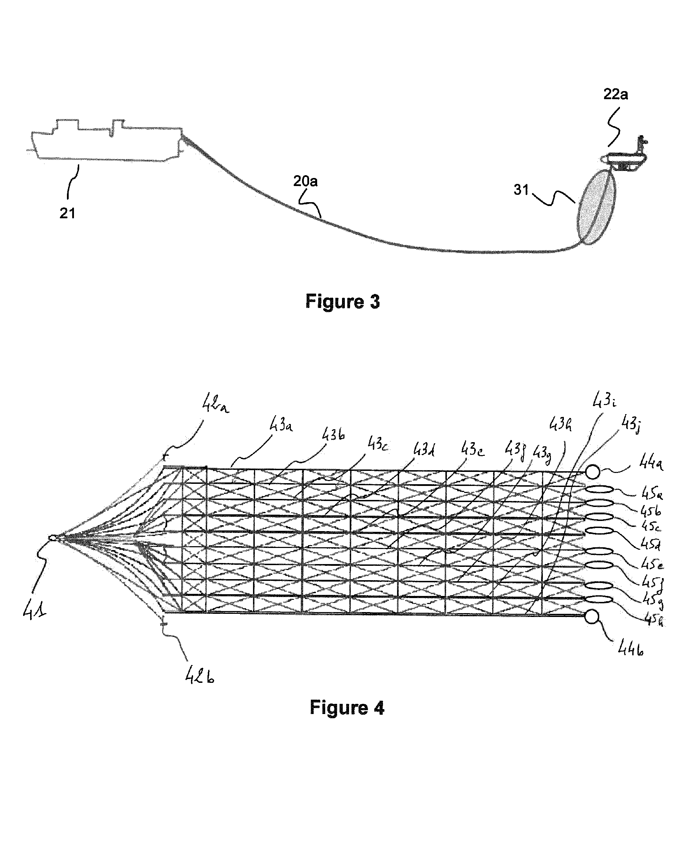

Unfortunately, the classical tail buoys have several drawbacks, especially with streamer tails that are deeply immersed (as an example, **figure 3** is a side view of a classical tail buoy 22a connected to the tail of a streamer 20a):
- a classical tail buoy has a very high flotation. When a very high tension is imposed on the cable by the birds (when the birds dive to immerse the streamer tail), the classical tail buoy is pulled under water but does not sink because of its very high flotation. This very high tension generates noise which pollutes the hydrophones present at the tail of the streamer;
- with a classical tail buoy connected to its tail, each streamer (and more precisely its hydrophones) is subject to noise generated by the sea surface environmental conditions (such as swell, wind and surface current);
- due to the classical tail buoy, the drag of the streamer is not constant and depends on the sea surface environmental conditions (this limits or prevents operations in rough weather);
- a classical tail buoy is a potential obstacle for floating bodies (e.g. vessels) and marine wildlife (turtles, etc.);
- a classical tail buoy can be damaged by surface obstacles (fishing nets, floating bodies, vessels, etc.);
- depending on weather condition, in sea interventions on classical tail buoys (deployment and recovery from and up to the streamer deck of the seismic vessel) can be very risky (i.e. risky workboat operations) because classical tail buoys are voluminous;
- the classical tail buoys are voluminous, therefore they are difficult to store and to handle, on land and on the vessel deck;
- in the part of the streamer ("upward section" referenced 31 in figure 3) which is just before the classical tail buoy 22a and which is strongly inclined (e.g. 8° for 50 m), the birds are in a sloping position which increases the risk of failure of these birds;
- the aforesaid "upward section" 31 of the streamer generates an unwanted drag (surplus of drag) which induces mechanical fatigue, vibration, increased consumption of boat, etc.

### 3. GOALS OF THE INVENTION

The invention, in at least one embodiment, is aimed especially at overcoming these different drawbacks of the prior art.

More specifically, it is a goal of at least one embodiment of the invention to provide a technique for reducing the number of classical tail buoys used on streamer arrays (or even eliminate the need for using such classical tail buoys), in order to limit (or even cancel) the aforesaid drawbacks of the classical tail buoys.

It is an additional goal of at least one embodiment of the invention to provide a technique of this kind that is simple to implement and costs little.

### 4. SUMMARY OF THE INVENTION

A particular embodiment of the invention proposes a tail device, connectable to a tail of a towed acoustic linear antenna cooperating with a set of at least one depth control mean having a determined diving capability enabling to immerse the tail of the towed acoustic linear antenna, the tail device comprising a flotation body and a satellite navigation system receiver comprising an antenna fixed on said flotation body. The tail device is a towfish device having a flotation which is lesser than said diving capability of said set of at least one depth control mean.

This particular embodiment relies on a wholly novel and inventive approach taking advantage of the fact that on a multi-streamer system, once the full acoustic network is established, at least some tail GPS positioning is no longer necessary and therefore it is possible to immerse (dive) at least some of the tail devices (each connected to the tail of a streamer).

Thus, unlike the classical tail buoy that always floats (see above discussion of the prior art), the tail device of the invention has the following two operating modes:
- a first operating mode when the tail of the towed acoustic linear antenna is not immersed, in which the tail device is floating and the satellite navigation system receiver (e.g. GPS receiver) is operational; and
- a second operating mode when the tail of the towed acoustic linear antenna is immersed, in which the tail device is immersed and the satellite navigation system receiver is not operational.

The first operating mode allows to use the satellite navigation system receiver while the full acoustic network is not operational (e.g. while deploying and recovering the streamers from and up to the streamer deck of the seismic vessel, or in case of streamer break).

The second operating mode (which does not exist with the classical tail buoy) has several advantages due to the fact that the tail device is immersed:
- the low flotation of the tail device (towfish device) allows it to sink (when the birds dive to immerse the streamer tail) without generating noise polluting the hydrophones present at the tail of the streamer (contrary to a classical tail buoy which is pulled under water but does not sink because of its very high flotation);
- it allows to free the streamer tail from surface environmental conditions (such as swell, wind and surface current), therefore the streamer (and more precisely its hydrophones) is not subject to noise generated by the sea surface environmental conditions and the drag of the streamer is constant whatever sea surface environmental conditions (this allows extend operations in rough weather);
- the immersed tail device is not an obstacle for floating bodies (e.g. vessels) and marine wildlife (fishing nets, turtles, vessels, etc.);
- the immersed tail device can not be damaged by surface obstacles (fishing nets, floating bodies, vessels, etc.);
- contrary to the prior art shown in figure 3, there is no "upward section" of the streamer (before the tail device), therefore there is no unwanted drag and no depth control means ("birds") in a sloping position (reducing the risk of failure of these birds).

Moreover, the tail device is more compact and has a smaller volume than the classical tail buoys. Therefore the tail device is easy to store. The deployment, recovery and replacement operations at sea are facilitated (easy installation of the streamers, extending operations in adverse weather and reducing risks of entanglements).

According to a particular feature, the tail device comprises at least one inline module, connectable via a fixed link to the tail of the towed acoustic linear antenna, and a frame element, to which is fastened said flotation body via a fixed link and which can freely rotate around said at least one inline module.

Thus the at least one inline module can be connected directly to the end of the towed acoustic linear antenna (streamer). Thanks to the rotation of the frame element, twisting of the streamer is avoided and the tail device can stay in a "vertical position" (i.e. the antenna of the satellite navigation system receiver is out of the water and is operational).

According to a particular feature, the tail device comprises a swivel to ease rotation of the frame element around said at least one inline module.

According to a particular feature, the tail device comprises a mechanical fuse between said at least one inline module and said frame element.

The mechanical fuse (i.e. breakable link) allows to properly liberate the tail device in case of in case of too high traction force on the streamer (e.g. because of a collision with a floating body). Since the at least one inline module is connected directly to the end of the towed acoustic linear antenna (streamer), it remains with it (and is not lost) if the mechanical fuse is activated.

According to a particular feature, the tail device comprises a ballast body which is fastened to said frame element, via a fixed link.

The ballast body helps the tail device to remain upright (in a "vertical position") when it floats (aforesaid first operating mode).

According to a particular feature, the ballast body comprises a housing for a battery and/or electronic circuitry.

According to a particular feature, said at least one inline module provides at least one function belonging to the group comprising: power supply, acquisition telemetry and redundancy, acoustic positioning, depth monitoring and inertial navigation system.

According to a particular feature, said at least one inline module comprises a first inline module integrating an associated electronics of a localization acoustic node.

Thus the associated electronics of an acoustic node of a full acoustic network (comprising a plurality of acoustic nodes, as illustrated for example in figure 1) is partially integrated in the tail device. This allows to use a conventional module comprising the associated electronics of an acoustic node. This is possible because the first inline module in which it is integrated is directly connected (via a fixed link) to the tail of the streamer.

According to a particular feature, said associated electronics cooperates with an acoustic transducer comprised in the tail of the towed acoustic linear antenna.

This allows to use a conventional streamer section comprising an acoustic transducer. However, in an alternative embodiment, the acoustic transducer is comprised in the tail device (but not integrated in the first inline module, because the latter is shielded).

In an alternative embodiment, the tail device is associated, but does not comprise, a localization acoustic node comprised in the tail of the towed acoustic linear antenna.

This allows to simplify the tail device and use a conventional streamer section comprising a localization acoustic node (i.e. an acoustic transducer cooperating with an associated electronics).

According to a first specific implementation, said set of at least one depth control mean is not comprised, even partially, in said tail device and is mounted along the towed acoustic linear antenna.

In this first specific implementation, the tail device is less complex and the set of bird or birds (set of at least one depth control mean) is entirely disposed along the streamer, as in the conventional case where a buoy is connected to the streamer end.

According to a second specific implementation, said set of at least one depth control mean is comprised, at least partially, in said tail device.

In this second specific implementation, the number of bird or birds disposed along the streamer is reduced.

According to a particular feature, the tail of the towed acoustic linear antenna comprises an elastic section, to which said tail device is connectable via a fixed link.

The elastic section allows a streamer noise decoupling by mechanically uncoupling an active part of the streamer (comprising the hydrophones) from the tail device.

According to a particular feature, the tail device comprises a drogue chute.

The drogue chute allows to add the desired drag. In a particular implementation, the value of the drag is adjustable, for example by choosing a number of cones, as disclosed below).

According to a particular feature, the tail device comprises lateral wings.

The lateral wings provide a better vertical stability of the tail device.

According to a particular feature, the flotation body is such that the flotation of the tail device has a positive buoyancy in the range 250 Newtons to 350 newtons. Another particular embodiment of the invention proposes a seismic data acquisition system comprising a plurality of towed acoustic linear antennas, each towed acoustic linear antenna cooperating with a set of at least one depth control mean having a determined diving capability enabling to immerse the tail of the towed acoustic linear antenna. At least one given of said plurality of towed acoustic linear antennas has a tail connected to a tail device according to the present invention, said tail device having the following two operating modes:
- a first operating mode when the tail of the given towed acoustic linear antenna is not immersed, in which said tail device is floating and said satellite navigation system receiver is operational; and
- a second operating mode when the tail of the given towed acoustic linear antenna is immersed, in which said tail device is immersed and said satellite navigation system receiver is not operational.

### 5. LIST OF FIGURES

Other features and advantages of embodiments of the invention shall appear from the following description, given by way of an indicative and non-exhaustive examples and from the appended drawings, of which:
- Figure 1, already described with reference to the prior art, presents an example of network of seismic streamers towed by a seismic vessel;
- Figure 2, already described with reference to the prior art, illustrates in detail the block referenced C in figure 1 (i.e. a portion of the streamer);
- Figure 3, already described with reference to the prior art, is a side view of a classical tail buoy connected to the tail of a streamer;
- Figure 4 illustrates a first example of seismic data acquisition system, comprising two classical tail buoys and eight tail devices according to the invention;
- Figure 5 illustrates a second example of seismic data acquisition system, comprising two classical tail buoys and four tail devices according to the invention;
- Figures 6 (side view) and 7 (perspective view) illustrate a tail device according to a particular embodiment of the invention;
- Figure 8 is a side view illustrating the tail device of figures 6 and 7 after a mechanical fuse has been activated;
- Figures 9 (before activation) and 10 (after activation) illustrate more precisely the fuse mechanism.

### 6. DETAILED DESCRIPTION

In all of the figures of the present document, identical elements and steps are designated by the same numerical reference sign.

The schematic top view of **figure 4** illustrates a first example of seismic data acquisition system comprising several tail devices according to the invention. More precisely, this system comprises a network of ten seismic streamers 43a to 43j, towed by a seismic vessel 41 (two paravanes 42a and 42b are also shown). The tail of each of the two outer streamers 43a and 43j is equipped with a classical tail buoy 44a and 44b (see prior art presentation above). The tail of each other streamer 43b to 43i is connected to a towfish tail device 45a to 45h according to the invention.

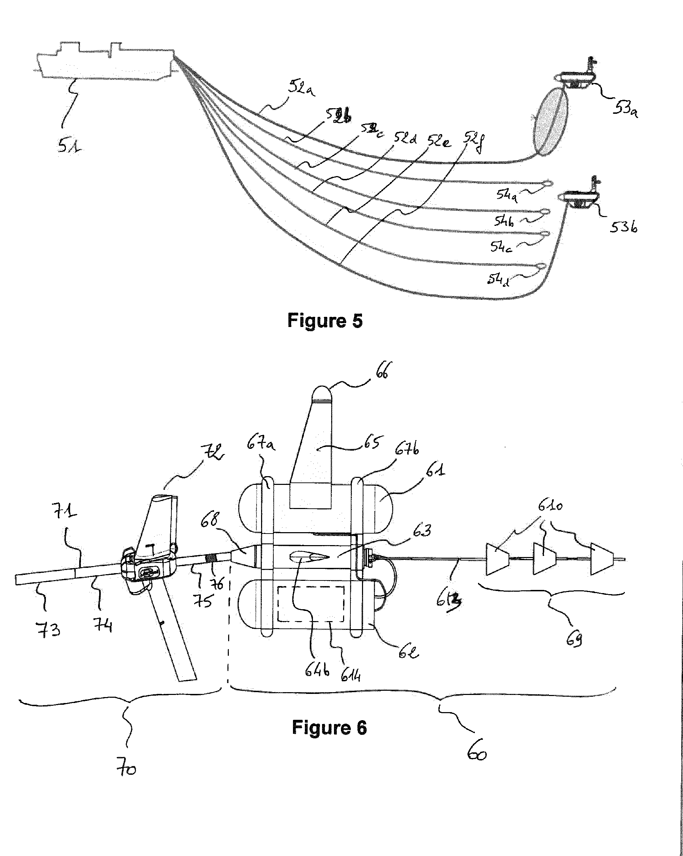

The schematic perspective view of **figure 5** illustrates a second example of seismic data acquisition system comprising several tail devices according to the invention. More precisely, this system comprises a network of six seismic streamers 52a to 52f, towed by a seismic vessel 51. The tail of each of the two outer streamers 52a and 52f is equipped with a classical tail buoy 53a and 53b (see prior art presentation above). The tail of each other streamer 52b to 52e is connected to a towfish tail device 54a to 54d according to the invention.

The towfish tail device according to the invention is not limited to the above examples and applies in many other configurations of the seismic data acquisition system. For example, in an alternative embodiment, even one (or both) of the two outer streamers is (are) equipped with a towfish tail device (instead of a classical tail buoy).

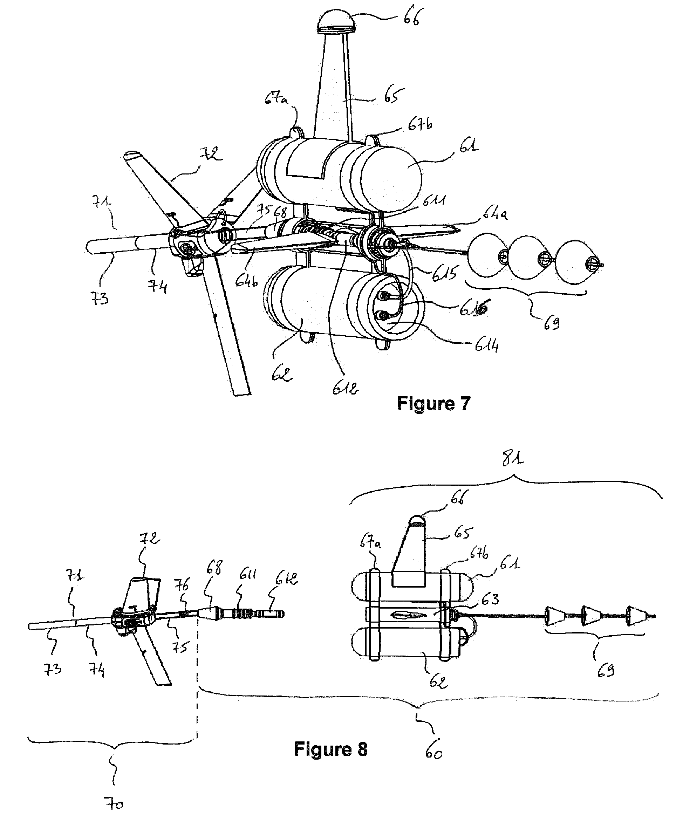

We present now, in relation to the side view of **figure 6** and the perspective view of **figure 7**, a tail device 60 (according to a particular embodiment of the invention) connected to the tail 70 of a streamer 71.

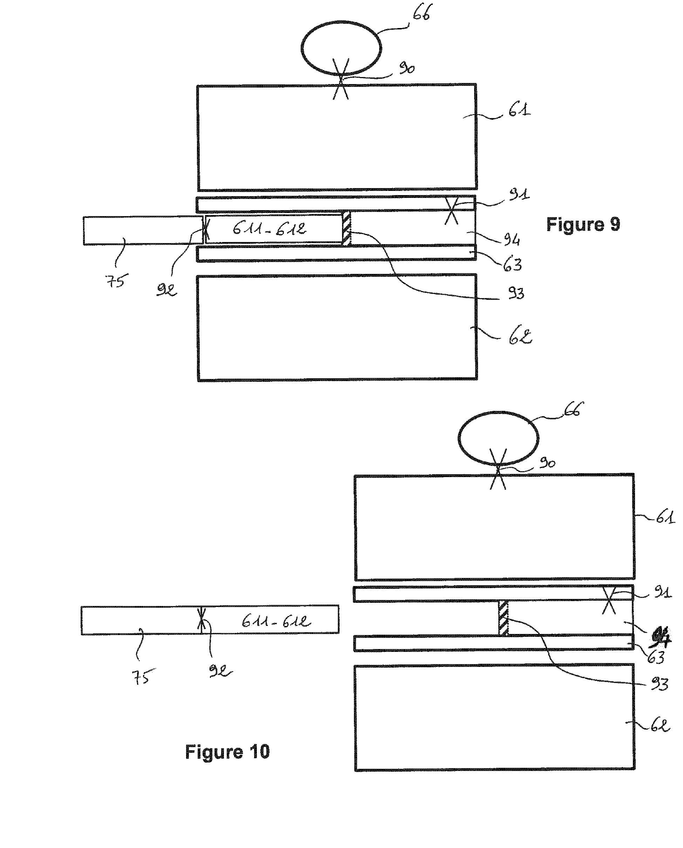

The tail device 60 comprises:
- a tubular frame element 63, provided with two lateral wings 64a and 64b (which maintain vertical stability), and mounted rotatably around two (or more) inline modules 611-612 (detailed below and visible in figure 7 wherein the tubular frame element 63 is hidden). The installation is easy, with the tubular frame element 63 sliding along the streamer 71, over the inline modules;
- a swivel (referenced 94 in figures 9 and 10), with an in-build rotating contact (slip-ring) allowing electrical connection while the tail device freely rotates around the inline modules 611-612, and allowing to ease rotation of the tubular frame element 63 around the inline modules 611-612, under tension;
- a mechanical fuse (referenced 93 in figures 9 and 10) between the inline modules 611-612 and the tubular frame element 63;
- the first inline module 611 is for example a Sercel's product called "Nautilus® inline module" (registered trademark) providing:
   ○ position in the acoustic network. In the particular embodiment shown in figures 6-8, the first inline module comprises only the part referred to as "associated electronics" of an acoustic node (14 in figures 1 and 2), but not the acoustic transducer 76 which is comprised in a tail elastic section 75 of the tail 70 of the streamer 71. In an alternative embodiment (not shown), the part referred to as "associated electronics" of an acoustic node (14 in figures 1 and 2) is not comprised in the first inline module but in a third inline module. In another alternative embodiment (not shown), the part referred to as "associated electronics" of an acoustic node (14 in figures 1 and 2) is not comprised in the tail device 60 but in the tail elastic section 75 of the tail 70 of the streamer 71 (i.e. the entire acoustic node is out of the tail device 60). In another alternative embodiment (not shown), the entire acoustic node is comprised in the tail device 60 (but the acoustic transducer 76 is not integrated in the first inline module 611, because the latter is shielded); and
   ○ depth monitoring and optional inertial navigation system (INS);
- the second inline module 612 is for example a Sercel's product called "SEAL® inline module", also referred to as TAPU (for "Tail Acquisition Power Unit") providing:
   ○ power supply (for powering the GPS antenna 66 disclosed below, directly or via the battery disclosed below, when the streamer power is disabled, e.g. when workboat intervention on the streamer); and
   ○ redundancy to the streamer telemetry;
- a flotation body 61, fastened to the tubular frame element 63 (via a fixed link performed with two fasteners 67a, 67b). The flotation body 61 is such that the flotation of the tail device 60 has a positive buoyancy in the range 250 Newtons to 350 newtons in sea water, lesser than the diving capability of the set of bird or birds 72 which control the depth of the tail 70 of the streamer 71. Thus, the depth of the tail device 60 is also controlled by the bird or birds 72 which control the depth of the streamer tail;
- a keel (ballast body) 62, fastened to the tubular frame element 63 (via a fixed link also performed with aforesaid two fasteners 67a, 67b) and comprising a housing 614 for a battery and electronic circuitry;
- a submersible GPS antenna (transponder with radio) 66 fixed at the top of a mast 65 itself fastened to the flotation body 61. The transmission of the GPS data towards the vessel goes through either the streamer (notably via the first and second power and data cables 615 and 616 disclosed below, and via the first inline module 611 (using a dedicated pair or through the telemetry channel)) or via a radio transmission link carried out by the GPS antenna;
- a bend stiffener 68, through which the inline modules 611 and 612 are fastened to the tail 70 of the streamer 71 (and more precisely to the tail elastic section 75);
- a first power and data cable 615, connecting the inline modules 611 and 612 to the housing 614 (i.e. battery and electronic circuitry). An optional protective hose (not shown) can be used for the first power and data cable 615;
- a second power and data cable 616, connecting the housing 614 (i.e. battery and electronic circuitry) to the GPS antenna 66; and
- a drogue chute 69 comprising several cones 610 linked by a rope 613, to add drag (adjustable by the number of cones 610, e.g. up to 800daN at 5 knots). The drogue chute 69 can be stored on the streamer winch.

The tail 70 of the streamer 71 comprises:
- a solid acquisition section 73, and its associated tail solid section 74;
- one or several birds 72; and
- a tail elastic section 75, providing streamer noise decoupling and comprising an acoustic transducer 76 (which cooperates with the first inline module 611, for providing relative position in the acoustic network and depth).

The tail device 60 operates as follows: it gives streamer tail position thanks to the GPS antenna, when afloat (i.e. while deployment, recovery, workboat operation or streamer break), and it gives streamer tail position through acoustic network, when immersed (i.e. once the full acoustic network is established).

In an alternative embodiment, the tail device further comprises means to control the depth of the tail streamer. In other words, the tail device 60 comprises at least some means of a bird: motorized pivoting wings (or more generally means of mechanical moving) making it possible to drive the streamer in immersion (vertical driving). In this alternative embodiment, the tail device can be used instead or in addition to the bird or birds which control the depth of the streamer tail.

**Figure 8** is a side view illustrating the tail device 60 after the mechanical fuse 93 has been activated. As can be seen, the tail device is properly liberated and after fuse break, the inline modules 611 and 612 remain fastened to the streamer tail 70, through the bend stiffener 68. All the other elements of the tail device are in the released part 81.

**Figure 9** (before mechanical fuse 93 activation) and **figure 10** (after mechanical fuse 93 activation) illustrate more precisely the fuse mechanism. The cross referenced 90, 91 and 92 represent fixed links respectively:
- between the submersible GPS antenna 66 and the flotation body 61 (trough the mast 65);
- between the tubular frame element 63 and the swivel 94;
- between the inline modules 611 and 612 and the tail elastic section 75 (through the bend stiffener 68).

## Claims

1. Tail device (60), connectable to a tail (70) of a towed acoustic linear antenna (71) cooperating with a set of at least one depth control mean (72) having a determined diving capability enabling to immerse the tail of the towed acoustic linear antenna, the tail device comprising a flotation body (61) and a satellite navigation system receiver comprising an antenna (66) fixed on said flotation body, **characterized in that** it is a towfish device having a flotation which is lesser than said diving capability of said set of at least one depth control mean.

2. Tail device according to claim 1, **characterized in that** it comprises at least one inline module (611, 612), connectable via a fixed link to the tail of the towed acoustic linear antenna, and a frame element (63), to which is fastened said flotation body via a fixed link and which can freely rotate around said at least one inline module.

3. Tail device according to claim 2, **characterized in that** it comprises a swivel (94) to ease rotation of the frame element around said at least one inline module.

4. Tail device according to any one of the claims 2 to 3, **characterized in that** it comprises a mechanical fuse (93) between said at least one inline module and said frame element.

5. Tail device according to claim any one of the claims 2 to 4, **characterized in that** it comprises a ballast body (62) which is fastened to said frame element, via a fixed link.

6. Tail device according to claim 5, **characterized in that** the ballast body comprises a housing (614) for a battery and/or electronic circuitry.

7. Tail device according to any one of the claims 2 to 6, **characterized in that** said at least one inline module provides at least one function belonging to the group comprising: power supply, acquisition telemetry and redundancy, acoustic positioning, depth monitoring and inertial navigation system.

8. Tail device according to any one of the claims 2 to 7, **characterized in that** said at least one inline module comprises a first inline module (611) integrating an associated electronics of a localization acoustic node.

9. Tail device according to claim 8, **characterized in that** said associated electronics cooperates with an acoustic transducer (76) comprised in the tail of the towed acoustic linear antenna.

10. Tail device according to any one of the claims 2 to 7, **characterized in that** it is associated, but does not comprise, a localization acoustic node (14) comprised in the tail of the towed acoustic linear antenna.

11. Tail device according to any one of the claims 1 to 10, **characterized in that** said set of at least one depth control mean (72) is not comprised, even partially, in said tail device and is mounted along the towed acoustic linear antenna.

12. Tail device according to any one of the claims 1 to 10, **characterized in that** said set of at least one depth control mean is comprised, at least partially, in said tail device.

13. Tail device according to any one of the claims 1 to 12, **characterized in that** the tail of the towed acoustic linear antenna comprises an elastic section 75), to which said tail device is connectable via a fixed link.

14. Tail device according to any one of the claims 1 to 13, **characterized in that** it comprises a drogue chute (69).

15. Tail device according to any one of the claims 1 to 14, **characterized in that** it comprises lateral wings (64a, 64b).

16. Tail device according to any one of the claims 1 to 15, **characterized in that** the flotation body is such that the flotation of the tail device has a positive buoyancy in the range 250 Newtons to 350 newtons.

17. Seismic data acquisition system comprising a plurality of towed acoustic linear antennas, each towed acoustic linear antenna cooperating with a set of at least one depth control mean (72) having a determined diving capability enabling to immerse the tail of the towed acoustic linear antenna, **characterized in that** at least one given of said plurality of towed acoustic linear antennas has a tail (70) connected to a tail device (60) according to any one of the claims 1 to 14, said tail device having the following two operating modes:
• a first operating mode when the tail of the given towed acoustic linear antenna is not immersed, in which said tail device is floating and said satellite navigation system receiver (66) is operational; and
• a second operating mode when the tail of the given towed acoustic linear antenna is immersed, in which said tail device is immersed and said satellite navigation system receiver is not operational.
